# EUROPÄISCHE PATENTSCHRIFT

(11) **EP 1 320 471 B1**
(45) Veröffentlichungstag und Bekanntmachung des Hinweises auf die Patenterteilung: **27.12.2006**
(21) Anmeldenummer: 01980439.2
(22) Anmeldetag: 26.09.2001
(51) Int. Cl.: B60K 35/00

(54) **KRAFTFAHRZEUG MIT EINER ELEKTRONISCHEN SPIELEINRICHTUNG**
MOTOR VEHICLE WITH AN ELECTRONIC GAME DEVICE
VEHICULE A MOTEUR DOTE D'UN DISPOSITIF DE JEU ELECTRONIQUE

(30) Priorität: 29.09.2000 DE 10048289
(43) Veröffentlichungstag der Anmeldung: 25.06.2003
(73) Patentinhaber: AUDI AG, 85045 Ingolstadt (DE)
(72) Erfinder: WALDMÜLLER, Christian, 85092 Kösching (DE)
(74) Vertreter: Thielmann, Frank
(86) Internationale Anmeldenummer: PCT/EP2001/011102
(87) Internationale Veröffentlichungsnummer: WO 2002/026518

(56) Entgegenhaltungen:
- WO-A-00/34104
- DE-A- 4 218 804
- DE-A- 19 907 799

## Beschreibung

Die Erfindung betrifft ein Kraftfahrzeug mit zumindest einer elektronischen Spieleinrichtung.

Aus der DE 197 43 024 A1 (repräsentiert den nachstliegenden bekannten Stand der Technik) ist ein derartiges Kraftfahrzeug bekannt, das zusätzliche Bedienmittel beispielsweise Schalter, einen Joystick und einen Trackball aufweist, mittels denen die elektronische Spieleinrichtung betätigt und das hierauf laufende elektronische Spiel ausgeführt werden kann.
In der WO-A-00/34104 ist ein Steuermodul mit einer CPU, einer bsp. als Trackball ausgebildeten Eingabeeinrichtung, einem Bildschirm und einer Vielzahl von I/O-Ports bzw. Schnittstellen (bsp. Diskettenlaufwerk oder CD-Rom-Laufwerk) beschreiben. Dieses Steuermodul kann in ein Fahrzeug eingebaut und wieder aus dem Fahrzeug ausgebaut werden und wird beim Einbringen ins Fahrzeug über Aufnahmevorrichtungen ins Cockpit eingebunden. Im eingebauten Zustand dient das Steuermodul als Fahrerinformationssystem, mittels dem eine Vielzahl von Fahrzeugfunktionen für den Fahrer dargestellt oder über die Eingabeeinrichtung angewählt bzw. selektiert werden können sowie als Steer-by-wire System, mittels dem das Fahrzeug durch elektrische Impulse gesteuert werden kann. Im ausgebauten Zustand ist das Steuermodul als PC verwendbar, gleichzeitig wird durch den Ausbau ein Diebstahlschutz gewährleistet, da das Fahrzeug dann nicht mehr funktionsfähig ist.

Aufgabe der Erfindung ist die vorteilhafte Ausgestaltung eines Kraftfahrzeugs durch kostengünstige Bereitstellung von Spielmöglichkeiten im Kraftfahrzeug mit geringem zusätzlichem Aufwand.
Diese Aufgabe wird erfindungsgemäß durch den Gegenstand des Patentanspruchs 1 gelöst.

Da die elektronische Spieleinrichtung über Fahrzeugführungsmittel betätigbar ist, sind vorteilhafterweise somit keine gesonderten, zusätzlichen Raum in Anspruch nehmende Bedienelemente vorzusehen, wodurch sich Einsparungen an Kosten und Platzbedarf ergeben.

Es ist vorteilhaft, wenn die Fahrzeugführungsmittel als Lenkrad, als Pedalerie, als Gangwahlhebel, als Blink- und/oder Lichtschalthebel ausgeführt sind, da diese bereits sowieso im Kraftfahrzeug vorhanden sind und somit keine Mehrkosten verursachen.
Eine weitere Kosteneinsparung ergibt sich, wenn die Anzeige der Spielgraphik des elektronischen Spiels an der Anzeigeeinrichtung eines Navigationssystems erfolgt, da somit keine gesonderte Anzeigeeinrichtung vorzusehen ist.
Sind weitere Bedienmittel mit Zugriff auf die elektronische Spieleinrichtung vorgesehen, ist es möglich, das elektronische Spiel auch mit mehreren Spielteilnehmern durchzuführen.
Ist eine Sende- und Empfangseinrichtung zum Senden und Empfangen von Spielinformationen über das elektronische Spiel vorgesehen, ist es vorteilhaft möglich, das elektronische Spiel auch mit anderen Teilnehmern außerhalb des Kraftfahrzeugs durchzuführen.

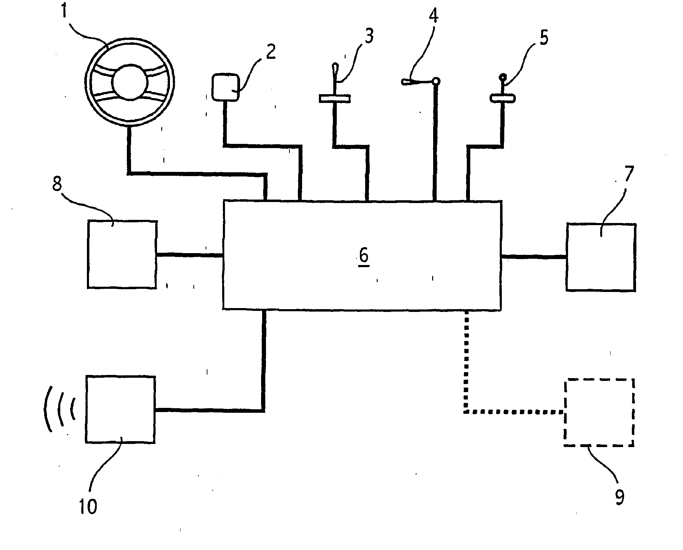

Weitere Vorteile und Einzelheiten der Erfindung ergeben sich aus der nachfolgenden Beschreibung eines Ausführungsbeispiels anhand der Zeichnung.

In der Figur sind als Fahrzeugführungsmittel beispielsweise ein Lenkrad 1, eine Pedalerie 2, ein Gangwahlhebel 3 und ein Blinkhebel 4 angeführt, die einzeln oder in Kombination dazu dienen, ein elektronisches Spiel zu betreiben.
Es ist selbstverständlich, dass hierzu auch weitere Bedienelemente, die im Kraftfahrzeug vorgesehen sind, herangezogen werden können. Es eignen sich hierzu beispielsweise am Lenkrad vorgesehene Betätigungsmittel ebenso wie Bedienmittel für das Radiogerät, das Telefon und/oder das Navigationssystem.
Vom Fahrzeugführer kann vorzugsweise nur dann auf das elektronische Spiel zugegriffen werden, wenn sich das Kraftfahrzeug im Ruhestand befindet. Vom im Kraftfahrzeug mitfahrenden Personen kann jedoch jederzeit über im Kraftfahrzeug vorgesehene weitere Bedienmittel, beispielsweise einen Joystick 5, Zugriff auf das elektronische Spiel genommen werden.
Zum Betreiben des elektronischen Spiels werden die Signale der Fahrzeugführungsmittel 1, 2, 3, 4 verwendet, wozu diese ggf. mit Wegaufnehmern und/oder Winkelstellungsgebern auszuführen sind. Die Signale der Fahrzeugführungsmittel 1, 2, 3, 4 und beispielsweise auch des Joysticks 5 werden einer Zentraleinheit 6 zugeführt, der eine Anzeigeeinrichtung 7 und ein Spielegenerator als elektronische Spieleinrichtung 8 zugeordnet sind. Über die Zentraleinheit 6 ist der Spielzugriff koordinierbar, insbesondere lässt sie die Teilnahme des Fahrzeugführers über die Fahrzeugführungsmittel 1, 2, 3, 4 nur zu, wenn sich das Kraftfahrzeug im Ruhezustand befindet und vorbestimmbare Voraussetzungen, wie Motor abgeschaltet und Handbremse betätigt, erfüllt sind.
Die Anzeigeeinrichtung 7 kann als separate Einrichtung ausgeführt sein, sie kann aber auch, sofern ein Navigationssystem im Kraftfahrzeug vorgesehen ist, auch die Anzeigeeinrichtung des Navigationssystems sein.
Im Rahmen der Erfindung ist es möglich, weitere Anzeigeeinrichtungen 9 vorzusehen, so dass den im Kraftfahrzeug mitfahrenden Personen beispielsweise jeweils eine Anzeigeeinrichtung zur Spielausführung zur Verfügung gestellt werden kann. Der Spielegenerator 8 kann beispielsweise als Personal Computer ausgeführt sein und eine Datenspeicher-Aufnahmeeinrichtung aufweisen.
Ist der Zentraleinheit 6 auch noch eine Sende- und Empfangseinrichtung 10 zugeordnet, so können Spielinformationen auch an Mitspieler gesendet oder von diesen empfangen werden, die sich nicht im Kraftfahrzeug befinden.

### BEZUGSZEICHENLISTE

- 1: Lenkrad
- 2: Pedalerie
- 3: Gangwahlhebel
- 4: Blinkhebel
- 5: Joystick
- 6: Zentraleinheit
- 7: Anzeigeeinrichtung
- 8: Spielegenerator
- 9: Weiterer Anzeigeeinrichtungen
- 10: Sende- und Empfangseinrichtung

## Patentansprüche

1. Kraftfahrzeug mit zumindest einer elektronischen Spieleinrichtung (8) mit zugeordneter Anzeigeeinrichtung (7) zum Anzeigen eines elektronischen Spiels,
wobei das elektronische Spiel über Fahrzeugführungsmittel (1, 2, 3, 4) ausführbar ist.

2. Kraftfahrzeug nach Anspruch 1,
wobei die Fahrzeugführungsmittel als Lenkrad (1), als Pedalerie (2), als Gangwahlhebel (3), als Blinkhebel (4) und/oder als Lichtschalthebel ausgeführt sind.

3. Kraftfahrzeug nach Anspruch 1 oder Anspruch 2,
wobei die Spielgraphik des elektronischen Spiels an der Anzeigeeinrichtung (7) eines Navigationssystems anzeigbar ist.

4. Kraftfahrzeug nach einem der Ansprüche 1 bis 3,
wobei zumindest ein weiteres Bedienmittel (5) zum Zugriff auf die elektronische Spieleinrichtung (8) vorgesehen ist.

5. Kraftfahrzeug nach einem der Ansprüche 1 bis 4,
wobei eine Sende- und Empfangseinrichtung (10) zum Senden und Empfangen von Spielinformationen über das elektronische Spiel vorgesehen ist.

## Claims

1. Vehicle with at least one electronic game appliance (8) with an associated display device (7) for displaying an electronic game, whereby the electronic game can be carried out by means of vehicle steering means (1, 2, 3, 4).

2. Vehicle in accordance with claim 1, whereby the vehicle steering means are implemented as a steering wheel (1), as pedal means (2), as a gear-control hand lever (3), as an indicator (4) and/or as means for turning lights on and off.

3. Vehicle in accordance with one of claims 1 or 2, whereby the game graphics of the electronic game can be displayed on the display device (7) of a navigation system.

4. Vehicle in accordance with at least one of claims 1 to 3, whereby there is at least one further operating means (5) for accessing the electronic game device (8).

5. Vehicle in accordance with one of claims 1 to 4, whereby there is a transmitting and receiving device (10) for transmitting and receiving game information on the electronic game.

## Revendications

1. Véhicule automobile avec au moins un dispositif de jeu électronique (8) avec un dispositif d'affichage adjoint (7) pour l'affichage d'un jeu électronique, dans lequel le jeu électronique est exécutable par l'intermédiaire de moyens de guidage du véhicule automobile (1, 2, 3, 4).

2. Véhicule automobile conformément à la revendication 1,
dans lequel les moyens de guidage du véhicule automobile sont réalisés sous forme de volant (1), de pédalerie (2), de levier de sélecteur de vitesses (3), de levier de clignotant (4) et / ou de levier de commande d'éclairage.

3. Véhicule automobile conformément à la revendication 2,
dans lequel le graphique de jeu du jeu électronique est affichable sur le dispositif d'affichage (7) d'un système de navigation.

4. Véhicule automobile conformément à l'une des revendications 1 à 3,
dans lequel au moins un autre moyen de commande (5) est prévu pour l'accès au dispositif de jeu électronique (8).

5. Véhicule automobile conformément à l'une des revendications 1 à 4,
dans lequel un dispositif d'émission et de réception (10) servant à l'émission et à la réception des informations de jeu est prévu via le jeu électronique.
